# EUROPÄISCHE PATENTSCHRIFT

(11) **EP 1 732 779 B1**
(45) Veröffentlichungstag und Bekanntmachung des Hinweises auf die Patenterteilung: **22.08.2007**
(21) Anmeldenummer: 05730279.6
(22) Anmeldetag: 01.04.2005
(51) Int. Cl.: B60K 31/04

(54) **GESCHWINDIGKEITSREGELSYSTEM FÜR EIN KAFTFAHRZEUG**
SPEED CONTROL SYSTEM FOR A MOTOR VEHICLE
SYSTEME DE REGULATEUR DE VITESSE DESTINE A UN VEHICULE

(30) Priorität: 03.04.2004 DE 102004016513
(43) Veröffentlichungstag der Anmeldung: 20.12.2006
(73) Patentinhaber: Bayerische Motoren Werke Aktiengesellschaft, 80809 München (DE)
(72) Erfinder: PRÖMM, Uwe, 80686 München (DE)
(86) Internationale Anmeldenummer: PCT/EP2005/003453
(87) Internationale Veröffentlichungsnummer: WO 2005/095143

(56) Entgegenhaltungen:
- EP-A- 0 930 192
- EP-A- 1 063 119
- DE-A1- 10 064 307
- DE-A1- 19 537 273

## Beschreibung

Die Erfindung bezieht sich auf ein Geschwindigkeitsregelsystem für ein Kraftfahrzeug nach dem Oberbegriff des Patentanspruchs 1.

Derzeit sind verschiedene Geschwindigkeitsregelsysteme in Kraftfahrzeugen bekannt, die durch Betätigung eines Bedienelements angesteuert werden. Automatische Geschwindigkeitsregelsysteme können bspw. als Tempomaten oder als sogenannte "Adaptiv-Cruise-Control-Systeme" ausgestaltet sein.

Aus der DE 43 38 098 C2 ist bspw. ein Bedienhebel für eine Geschwindigkeitsregeleinrichtung in einem Kraftfahrzeug bekannt, der ähnlich einem üblichen Blinker im Bereich des Lenkrads angebracht ist. Zur Ansteuerung verschiedener Funktionen, die unter anderem das Einstellen einer Soll-Geschwindigkeit, das Abrufen einer abgespeicherten Soll-Geschwindigkeit und das Abschalten der Geschwindigkeitsregelanlage umfassen, ist der Bedienhebel in zueinander senkrechte Richtungen tastend bewegbar.

Aus den DE 199 61 720 C2 ist ein Verfahren zur Geschwindigkeitsregelung eines Kraftfahrzeugs mit einem Antriebsmotor und einer Bremseinrichtung bekannt wobei die Geschwindigkeitsregelung durch den Fahrer aktiviert wird, um die Fahrgeschwindigkeit des Fahrzeugs bei einer vorgegebenen Soll-Geschwindigkeit aufrechtzuerhalten.

Die DE 100 64 307 A zeigt einen Bedienhebel für ein Geschwindigkeitsregelsystem, bei dem in Abhängigkeit von der auf den Bedienhebel ausgeübten Kraft ein Beschleunigungs- oder Verzögerungswunsch vorgegeben werden kann. Aus der DE 195 37 273 A ist bekannt, die vorgegebene Geschwindigkeit eines derartigen Systems bei kurzer Betätigung oder Dauerbetätigung zu verändern, während eine Änderung der Beschleunigung durch unterschiedliche Positionen erreicht wird.

Aufgabe der Erfindung ist es, ein verbessertes Geschwindigkeitsregelsystem anzugeben.

Diese Aufgabe wird erfindungsgemäß durch ein Geschwindigkeitsregelsystem nach Patentanspruch 1 gelöst. Vorteilhafte Weiterbildungen sind die Gegenstände der abhängigen Ansprüche.

Das erfindungsgemäße Geschwindigkeitsregelsystem für ein Kraftfahrzeug mit Mitteln zur Berechnung eines Antriebsmoments oder Bremsmoments in Abhängigkeit von einer vorgebbaren Soll-Geschwindigkeit, wobei die Soll-Geschwindigkeit durch Einfachbetätigung eines betätigbaren Bedienelements vorgegeben wird, zeichnet sich dadurch aus, dass bei Dauerbetätigung des Bedienelements anstelle der Soll-Geschwindigkeit eine Soll-Beschleunigung vorgegebenen wird, aus der das Antriebsmoment oder Bremsmoment berechnet wird.

Das erfindungsgemäße Geschwindigkeitsregelsystem bietet den Vorteil, dass der Fahrer zwischen einer Soll-Geschwindigkeitsvorgabe oder einer Soll-Beschleunigungsvorgabe wählen kann. Will der Fahrer die aktuelle Geschwindigkeit auf einen neuen Geschwindigkeitswert erhöhen oder reduzieren, betätigt er das Bedienelement einmal bzw. mehrmals um die entsprechende Soll-Geschwin digkeit vorzugeben. Bei einmaliger Einfachbetätigung in positive Richtung wird bspw. eine Soll-Geschwindigkeit vorgegeben, die um 1km/h zur aktuellen Geschwindigkeit erhöht oder reduziert ist. Bei mehrmaliger Einfachbetätigung wird eine Soll-Geschwindigkeit vorgegeben, die entsprechend der Anzahl der Einfachbetätigungen multipliziert mit 1 km/h zur aktuellen Geschwindigkeit erhöht oder reduziert ist.

Beabsichtigt der Fahrer hingegen eine Beschleunigung oder Verzögerung, kann er erfindungsgemäß durch eine Dauerbetätigung des Bedienelements eine Soll-Beschleunigung vorgeben. Die Vorgabe einer Soll-Beschleunigung durch den Fahrer bietet weiter den Vorteil, dass das Fahrzeug unabhängig vom aktuellen Lastwiderstand reproduzierbar die gleiche Beschleunigung bzw. Verzögerung erfährt. Der Fahrer wird bspw. bei einer Bergabfahrt nicht durch eine höhere Beschleunigung überrascht, als dies bei einer Brems- bzw. Antriebsvorgabe ohne Beschleunigung der Fall wäre. Bei der Soll-Beschleunigungsvorgabe wird dem Fahrzeug direkt eine definierte Soll-Beschleunigung eingeprägt, wobei hingegen bei der Soll-Geschwindigkeitsvorgabe sich die Beschleunigung indirekt aus der Abweichung zwischen Soll- und Ist-Geschwindigkeit, also aktueller Geschwindigkeit ergibt. Bei der Soll-Beschleunigungsvorgabe wird keine Soll-Geschwindigkeit vorgegebenen, vielmehr betätigt der Fahrer das Bedienelement solange, wie er das Fahrzeug beschleunigen bzw. verzögern möchte. Dem Fahrer kann ein vorausschauendes "Mitschwimmen" mit dem Verkehr ermöglicht werden, wobei die Fahrzeugreaktion nachvollziehbar und unmittelbar vom Fahrer gesteuert werden kann, da der Fahrer aktiv und direkt in die Steuerung des Fahrzeugs eingebunden ist.

Das Bedienelement kann bspw. als Bedienhebel am Lenkrad ausgebildet sein. Eine Einfachbetätigung ergibt sich bspw. durch einmaliges Drücken oder Ziehen für einen kurzen Zeitpunkt an dem Bedienelement. Eine Dauerbetätigung ergibt sich hingegen bspw. durch Drücken oder Ziehen für einen vorgegebenen Zeitraum. Abhängig von der Richtung der Betätigung wird bei der Einfachbetätigung des Bedienelements eine zur aktuellen Geschwindigkeit erhöhte oder reduzierte Soll-Geschwindigkeit vorgegeben.

Ebenso wird abhängig von der Richtung der Betätigung bei der Dauerbetätigung eine positive oder negative Soll-Beschleunigung vorgegeben. Anstelle eines Bedienhebels kann das Bedienelement bspw. auch als Wipptaste ausgebildet sein.

Da nach dem Loslassen des Bedienelements aus der Dauerbetätigung keine geeignete Soll-Geschwindigkeit mehr vorliegt, abhängig von der die Berechnung des Antriebs- oder Bremsmoments vorgenommen werden kann, wird vorteilhafterweise beim Loslassen des Bedienelements die aktuelle Geschwindigkeit oder eine zur aktuellen Geschwindigkeit um einen vorgegebenen Wert abweichende Geschwindigkeit als Soll-Geschwindigkeit vorgegeben. Die Abweichung von der aktuellen Geschwindigkeit sollte betragsmäßig nur geringfügig von der aktuellen Geschwindigkeit abweiden und die Richtung sollte derart vorgegeben werden, dass sie bei einer vorangegangenen Beschleunigung des Fahrzeugs größer als die aktuelle Geschwindigkeit und bei einer vorangegangenen Verzögerung des Fahrzeugs kleiner als die aktuelle Geschwindigkeit ist. Die Abweichung bietet den Vorteil, dass die Beschleunigung bzw. die Verzögerung für den Fahrer komfortabel mit einem asymptotischen Übergang in die Konstantfahrt abgebaut wird.

Die Soll-Beschleunigung kann ein fest vorgegebener Wert sein. Vorteilhafterweise wird die Soll-Beschleunigung in Abhängigkeit von zumindest einem Parameter vorgegeben. Bspw. kann die Soll-Beschleunigung in Abhängigkeit von der aktuellen Fahrzeuggeschwindigkeit oder anderen Betriebsparametern des Fahrzeugs vorzugeben. Je höher die aktuelle Fahrzeuggeschwindigkeit ist, desto kleiner sollte die Soll-Beschleunigung betragsmäßig sein. Es wäre auch denkbar, die Soll-Beschleunigung unter anderem abhängig von der Fahrweise des Fahrers vorzugeben. Die Soll-Beschleunigung kann aus einer Kennlinie bzw. einem Kennfeld vorgegeben werden.

Vorteilhafterweise werden bei der Berechnung des Antriebsmoments oder des Bremsmoments die Lastwiderstände, wie z. B. Berg- oder Talfahrt oder die Aerodynamik des Fahrzeugs berücksichtigt, um die Soll-Geschwindigkeit möglichst genau einstellen zu können.

Vorteilhafterweise ist das Bedienelement in mehreren Bedienebenen betätigbar, wobei bei Einfachbetätigung des Bedienelements eine bedienebenen-spezifische Soll-Geschwindigkeit und bei Dauerbetätigung eine bedienebenen-spezifische Soll-Beschleunigung vorgegebenen wird.

Bedienelemente mit mehreren Bedienebenen werden bereits im Bereich der automatischen Geschwindigkeitsregelung verwendet. Hierbei wird bspw. bei einer Betätigung des Bedienelements in einer ersten Ebene die Soll-Geschwindigkeit um 1 km/h erhöht oder reduziert. Im Gegensatz dazu wird bei einer Betätigung des Bedienelements in einer zweiten Bedienebene die Soll-Geschwindigkeit bspw. um 5 km/h oder 10/km/h erhöht oder reduziert. In der erfindungsgemäßen Weiterbildung ist es dementsprechend auch möglich, in den verschiedenen Bedienebenen bei einer Dauerbetätigung des Bedienelements verschiedene Soll- Beschleunigungen vorzugeben.

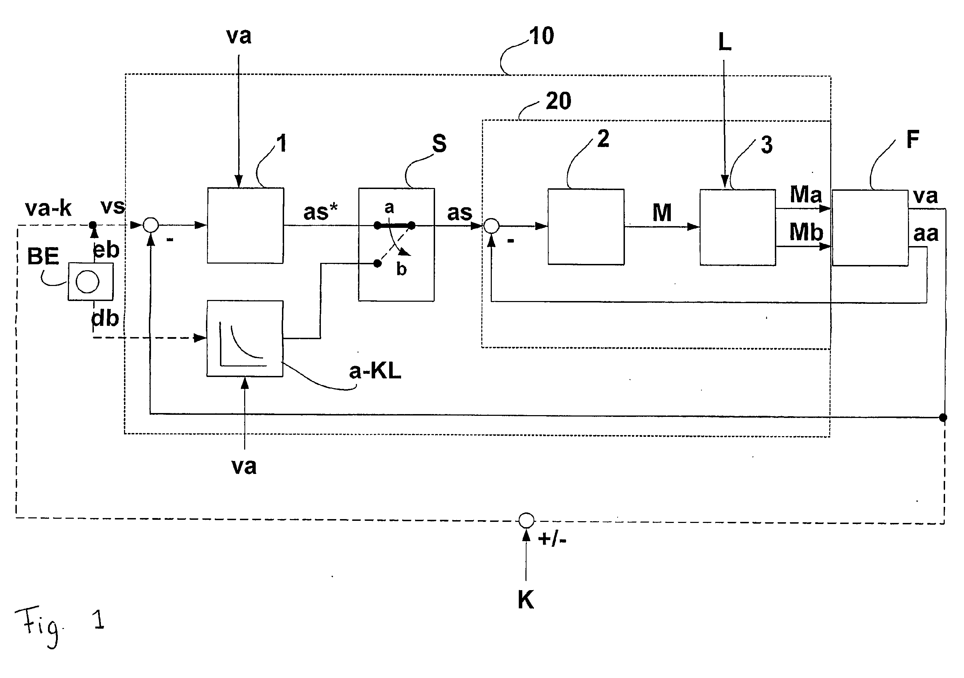

In der Zeichnung ist ein Ausführungsbeispiel des erfindungsgemäßen Geschwindigkeitssystems gemäß dem Patentanspruch 1 angegeben.

Die einzige Figur zeigt ein Geschwindigkeitsregelsystem 10 für ein Kraftfahrzeug F mit Mitteln 1, S, 2 und 3 zur Berechnung eines Antriebsmoments Ma oder Bremsmoments Mb in Abhängigkeit von einer vorgebbaren Soll-Geschwindigkeit vs, wobei die Soll-Geschwindigkeit vs durch Einfachbetätigung eb eines betätigbaren Bedienelements BE vorgegeben wird. Bei der Einfachbetätigung eb des Bedienelements BE befindet sich der Schalter S in der Stellung a. Betätigt bspw. der Fahrer bei einer aktuellen Geschwindigkeit va von 80 km/h das Bedienelement BE einmal, wird eine Soll-Geschwindigkeit vs von 81 km/h vorgegeben. In einer ersten Einheit 1 wird abhängig von der aktuellen Geschwindigkeit va des Fahrzeugs f und der vorgegebenen Soll-Geschwindigkeit vs indirekt eine Beschleunigung as* berechnet, die als Soll-Beschleunigung as vorgegeben wird, um die gewünschte Soll-Geschwindigkeit vs zu erhalten. Aus der in diesem Fall berechnete Soll-Beschleunigung as wird durch eine bereits bekannte Beschleunigungsregelung 20 mit den Mitteln 2 und 3 das Antriebsmoment Ma oder Bremsmoment Mb berechnet. Aus der Differenz der Soll-Beschleunigung as und der aktuellen Beschleunigung aa wird in der Einheit 2 ein Anforderungs-Moment M berechnet, aus dem in der Einheit 3 ein Antriebs- und/oder Bremsmoment berechnet wird. Bei der Berechnung des Antriebsmoments Ma oder des Bremsmoments Mb werden vorteilhafterweise die Lastwiderstände L des Fahrzeugs F berücksichtigt. Mit dem berechneten Antriebsmoment Ma oder Bremsmoment Mb wird das Fahrzeug FZG angetrieben, um eine aktuelle Geschwindigkeit va zu erhalten, welche der vorgegebenen Soll-Geschwindigkeit vs entspricht.

Bei einer Dauerbetätigung db des Bedienelements BE wird erfindungsgemäß anstelle der Soll-Geschwindigkeit vs eine Soll-Beschleunigung as vorgegebenen, aus der das Antriebsmoment Ma oder Bremsmoment Mb berechnet wird. Der Schalter S befindet sich bei der Dauerbetätigung db in der Stellung b. Die Soll-Beschleunigung as wird vorteilhafterweise in Abhängigkeit von der aktuellen Geschwindigkeit va vorgegeben. Sie wird durch eine Kennlinie a-KL vorgegeben. Die Beschleunigungsregelung 20 wird identisch der Beschleunigungsregelung 20 bei der Soll-Geschwindigkeitsvorgabe vorgenommen.

Beim Loslassen des Bedienelements BE aus der Dauerbetätigung db wird vorteilhafterweise eine zur aktuellen Geschwindigkeit va um einen vorgegebenen Wert K abweichende Geschwindigkeit va-k als Soll-Geschwindigkeit vs vorgegeben. Wenn das Bedienelement BE in mehreren Bedienebenen betätigbar ist, wird vorteilhafterweise bei Dauerbetätigung db eine bedienebenen-spezifische Soll-Beschleunigung as vorgegebenen.

Es können eine Vielzahl weiterer Details durchaus abweichend von obiger Beschreibung gestaltet sein, ohne den Inhalt der Patentansprüche zu verlassen.

## Patentansprüche

1. Geschwindigkeitsregelsystem für ein Kraftfahrzeug mit Mitteln zur Berechnung eines Antriebsmoments oder Bremsmoments in Abhängigkeit von einer vorgebbaren Soll-Geschwindigkeit, wobei die Soll-Geschwindigkeit durch Einfachbetätigung eines betätigbaren Bedienelements vorgegeben wird, **dadurch gekennzeichnet, dass** bei Dauerbetätigung (db) des Bedienelements (BE) anstelle der Soll-Geschwindigkeit (vs) eine Soll-Beschleunigung (as) vorgegebenen wird, aus der das Antriebsmoment (Ma) oder Bremsmoment (Mb) berechnet wird.

2. Geschwindigkeitsregelsystem nach Patentanspruch 1, **dadurch gekennzeichnet, dass** beim Loslassen des Bedienelements (BE) aus der Dauerbetätigung (db) die aktuelle Geschwindigkeit (va) oder eine zur aktuellen Geschwindigkeit (va) um einen vorgegebenen Wert (K) abweichende Geschwindigkeit (va-k) als Soll-Geschwindigkeit (vs) vorgegeben wird.

3. Geschwindigkeitsregelsystem nach Patentanspruch 1, **dadurch kennzeichnet, dass** die Soll-Beschleunigung (as) in Abhängigkeit von zumindest einem Parameter (va) vorgegeben wird.

4. Geschwindigkeitsregelsystem nach Patentanspruch 1 oder 2, **dadurch gekennzeichnet, dass** bei der Berechnung des Antriebsmoments (Ma) oder des Bremsmoments (Mb) die Lastwiderstände (L) des Fahrzeugs (F) berücksichtigt werden.

5. Geschwindigkeitsregelsystem nach einem der vorangegangenen Patentansprüche, **dadurch gekennzeichnet, dass** das Bedienelement (BE) in mehreren Bedienebenen betätigbar ist, und dass bei Dauerbetätigung (db) eine bedienebenen-spezifische Soll-Beschleunigung (as) vorgegebenen wird.

## Claims

1. A speed control system for a motor vehicle, comprising means for calculating a drive torque or a braking torque in dependence on a settable speed, wherein the speed is set by single actuation of an actuatable control element, **characterised in that** continuous actuation (db) of the control element (BE) results not in a set speed (vs) but in a set acceleration (as), from which the driving torque (Ma) or the braking torque (Mb) is calculated.

2. A speed control system according to claim 1, **characterised in that** when the control element (BE) is released after continuous actuation (db) the actual speed (va) or a speed (va-K) deviating from the actual speed (va) by a set value (K) is set as the speed (vs).

3. A speed control system according to claim 1, **characterised in that** the acceleration (as) is set in dependence on at least one parameter (va).

4. A speed control system according to claim 1 or 2, **characterised in that** the load resistance (L) of the vehicle (S) is taken into consideration when calculating the driving torque (Ma) or the braking torque (Mb).

5. A speed control system according to any of the preceding claims, **characterised in that** the control element (BE) can be actuated at a number of operating levels, and continuous actuation (db) results in a level-specific set actuation (as).

## Revendications

1. Système de régulateur de vitesse pour un véhicule automobile comprenant des moyens pour calculer un couple d'entraînement ou d'un couple de freinage en fonction d'une vitesse de consigne prédéterminée, la vitesse de consigne étant prédéterminée par un actionnement simple d'un élément de commande manoeuvrable,
**caractérisé en ce que**
l'actionnement en continu (db) d'un élément de commande (BE) prédétermine, à la place de la vitesse de consigne (vs), une accélération de consigne (as) à partir se calcule le couple d'entraînement (Ma) ou le couple de freinage (Mb).

2. Système de régulateur de vitesse selon la revendication 1,
**caractérisé en ce que**
le relâchement de l'élément de commande (BE) à partir d'un actionnement en continu (db), prédétermine comme vitesse de consigne (vs) la vitesse actuelle (va) ou une vitesse (va-k) différant de la vitesse actuelle (va) d'une valeur prédéterminée (K).

3. Système de régulateur de vitesse selon la revendication 1,
**caractérisé en ce que**
l'accélération de consigne (as) est prédéterminée en fonction d'au moins un paramètre (va).

4. Système de régulateur de vitesse selon la revendication 1 ou 2,
**caractérisé en ce que**
le calcul du couple d'entraînement (Ma) ou du couple de freinage (Mb), prend en considération la résistance de charge (L) du véhicule (F).

5. Système de régulateur de vitesse selon l'une des revendications précédentes,
**caractérisé en ce que**
l'élément de commande (BE) est actionnable dans différents plans de commande et un actionnement en continu (db), prédétermine une accélération de consigne (as) dépendant du plan de commande.
